# EUROPEAN PATENT APPLICATION

(11) **EP 0 959 099 A1**
(43) Date of publication of application: **24.11.1999**
(21) Application number: 98113222.8
(22) Date of filing: 14.07.1998
(51) Int. Cl.: C08J 9/00, C08J 9/08

(54) **Process and plant for the production of foamed polyurethanes containing a rubber latex**

(30) Priority: 19.05.1998 IT MI981101
(71) Applicant: VEFER SpA, 20035 Lissone (Milano) (IT)
(72) Inventor: Recrosio, Enrico, 20035 Lissone (Milano) (IT)
(74) Representative: Di Iorio, Vincenzo, Dr. Ing.

(57) **Abstract**

A new polyurethane manufactured by the joining of high-technology urethane polymers and rubber latex in various percentages, in which the water necessary for the polyurethane expansion reaction is the emulsion water of rubber latex; which latex in water emulsion is injected upstream the mixing head of raw polyurethane products, that is, of the polyol and toluene-di-isocyanate, and which latex is embodied into the structure of the final polyurethane, granting in this manner better characteristics of resiliency and undeformability to the final polyurethane, and further a better comfort of foamed product and velvet surface that are typical of rubber latex.

## Description

### Description of the invention

This invention refers to the field of polyurethane production, and in particular it achieves a good symbiosis of characteristics of polyurethanes and of natural or artificial rubber latex, obtaining in this manner in the polyurethane structure some of characteristics that are typical of rubber latex, that is a better comfort, better velvet surface, greater resiliency and undeformability and resistance.

The classic production of polyurethane is made using polyol and toluene-di-isocyanate, that are then joined with water in a mixing chamber for getting a homogeneous mixture. This chamber holds a mixing shaft with crossed blades structure, that is with horizontal and oblique arms that turns at ab. 5000 rev/min, and the reaction product is unloaded from the lower side of the chamber for being then transferred on a deposition bed that generates a product in expanded layer form.

For getting the polymerisation, the above mentioned classic polyurethane production system uses clean water that is necessary for obtaining, together with various reaction products that are polyol, isocyanate and suitable activators or catalysts, CO₂ (carbon dioxide), that causes the foam cellular structure to be generated, that is, the structure typical of the final product, termed as "foamed polyurethane".

Now we have thought to use together with polyurethane also the rubber latex, that, as well known, generates a product with good softness surface properties and that is used as raw material before emulsifying the natural or artificial rubber in water. Further we have thought to use latex emulsion water instead of or together with clean water normally used in the polyurethane production cycle.

Further it is well known that the contact of rubber latex with isocyanate cannot be obtained as these products, in normal conditions, have different chemical characteristics and are not mixable with one another.

For getting this mixing of rubber emulsion with polyol and isocyanate, it is used a main characteristic of the present invention, that is the introduction of latex emulsion into the polyol pipe, with which it is mixed perfectly, upstream the injection head and then making the final mixing with toluene-di-isocyanate only in the mixing chamber together with catalysts suitable for getting the expansion of final polymer.

In this manner it can be spared a great quantity of water that must be not added to the mixture in clean condition, but this water is got from the emulsion of rubber latex, and it is also foreseen the eventual addition of clean water in the case that the polyurethane must be greatly foamed.

The water of latex emulsion is practically worn out during the reaction, while the rubber solid part is imprisoned in the reticule of polyurethane, generating a complex polymer that joins the characteristics of the two products, that is a good mechanical strength and resiliency of polyurethane and a good softness of rubber latex, conferring a good quality to the product surface.

Therefore the rubber latex remains imprisoned in the reaction mass in a perfectly homogeneous manner and consequently it remains in the inside of finished polyurethane molecule, conferring the above mentioned softness characteristics thereto.

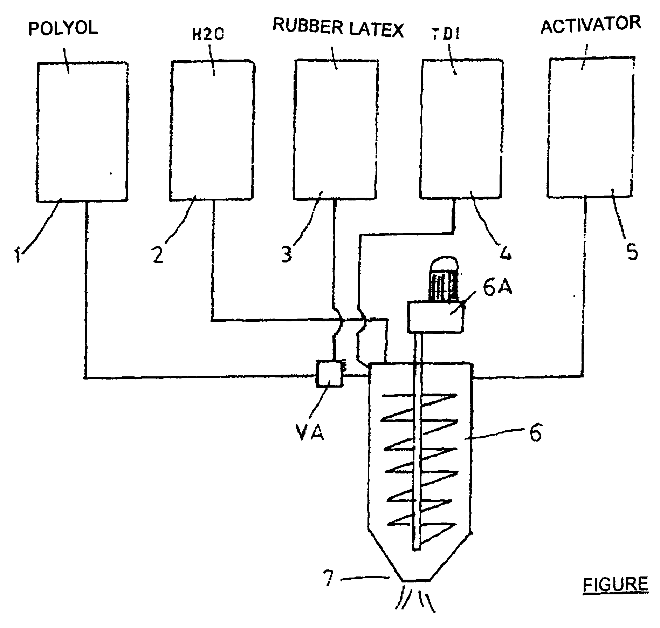

For a better comprehension of the present invention and for showing better as it can be put in practice, there shall be made reference, as an example, to the sole annexed figure, in which:
- La Figure shows the new plant type for the production of polyurethane added with rubber latex.

Making reference to the Figure, the tank 1 is the polyol holder, the tank 2 is the water holder for the eventual water addition, the tank 3 is the rubber latex holder, the tank 4 is the holder of TDI (toluene-di-isocyanate), the tank 5 is the holder of an activator or catalyst and the reference 6 shows the mixing chamber with motor and reduction unit 6A.

All these tanks are joined to the mixing chamber 6 and the relevant pipes are supplied with its batching pumps adjustable according to characteristics of the final product to be obtained. Further it must be noticed that, differentiating from the traditional system used for the polyurethane production, it must be added the tank 3 of rubber latex, that is joined to pipe that joins the polyol tank 1 to the chamber 6 by means of the batching pump VA. The latex, perfectly soluble in the polyol, supplies the water necessary for the reaction of the polyol with the isocyanate and then the excessive water addition can be avoided. Further it is foreseen a tank 2 of clean water that is used to batch suitably the water quantities according to the expansion to be obtained in the finished polyurethane product, caused by the CO₂ formation.

The mixing chamber 6 is of usual type, cylindrical, with central shaft that turns at ab. 5000 rev/min and supplied with transversal, horizontal and oblique bars for getting a good mixing of product that is unloaded downwards from the same chamber through an opening 7.

Using the shown process and plant, it is possible to spare a great water quantity, getting also good characteristics of the final product that is a polymer with a good combination of typical characteristics of polyurethane and rubber latex.

Although the present invention was described with reference to its sole particular fulfilment form, many other variants and modifications and other uses shall be evident to the persons skilled of technics.

## Claims

1. A polyurethane manufactured by the joining of high-technology urethane polymers and rubber latex in various percentages, in which the water necessary for the generation and foaming reaction of polyurethane is the suspension water of rubber latex, which latex in water emulsion is injected upstream the mixing head of raw polyurethane products, that is of the polyol and toluene-di-isocyanate, and which latex is embodied into the structure of the final polyurethane, granting in this manner better characteristics of resiliency and undeformability to the final polyurethane, and further a better comfort of foamed product and velvet surface that are typical of rubber latex.

2. A plant for the manufacturing of the product described in claim 1, characterised in that the tank (1) is the polyol holder, the tank (2) is the water holder for the eventual water addition, the tank (3) is the rubber latex holder, the tank (4) is the holder of TDI (toluene-di-isocyanate), the tank (5) is the holder of an activator or catalyst and the reference (6) shows the mixing chamber, in which plant all of these tanks (1, 2, 3, 4. 5) are joined to the mixing chamber (6) and the related pipes are supplied with batching pumps adjustable according to characteristics of the final product to be obtained.

3. A plant as shown in claim 2, when depending on claim 1, in which the tank (3) of rubber latex is joined to the pipe that joins the tank (1) of polyol to the mixing chamber (6) by a batching pump (VA) obtaining in this manner a mixing of rubber latex with polyol before the polyol reacts with isocyanate, as the latex is perfectly mixable in the polyol.

4. A plant as shown in preceding claims, in which it can be mixed a certain quantity of clean water coming from the tank (2) into the mixing chamber (6) for obtaining different types of foamed polyurethane holding also rubber latex.

5. A product obtained by means of the plant described in the preceding claims, in which the polyurethane polymer holds in its inside a suitably batched chain of natural or artificial rubber latex that produces a polyurethane with a better surface and greather softness.
